# EUROPÄISCHE PATENTANMELDUNG

(11) **EP 4 664 167 A1**
(43) Veröffentlichungstag der Anmeldung: **17.12.2025**
(21) Anmeldenummer: 25181750.8
(22) Anmeldetag: 10.06.2025
(51) Int. Cl.: G02B 6/02, G02B 6/26, G02B 6/32

(54) **AUSKOPPELVORRICHTUNG SOWIE LICHTWELLENLEITERSTECKER MIT EINEM SOLCHEN**

(30) Priorität: 11.06.2024 DE 102024116349
(71) Anmelder: HUBER+SUHNER Cube Optics AG, 55129 Mainz (DE)
(72) Erfinder: Hübner, Manfred, 65185 Wiesbaden (DE); Brantzen, Samuel, 55129 Mainz (DE); Drews, Dietrich, 55278 Selzen (DE)
(74) Vertreter: WSL Patentanwälte Partnerschaft mbB

(57) **Zusammenfassung**

Auskoppelvorrichtung zum Auskoppeln eines optischen Signals aus einem Hohlkern-Lichtwellenleiter, wobei die Auskoppelvorrichtung aufweist: einen Hohlkern-Lichtwellenleiter mit einem ersten Endabschnitt, einem zweiten Endabschnitt, die jeweils eine Stirnfläche des Lichtwellenleiters umfassen, sowie einem Hauptabschnitt, welcher zwischen dem ersten Endabschnitt und dem zweiten Endabschnitt angeordnet ist, wobei der Hohlkern-Lichtwellenleiter einen Kern, der dafür vorgesehen ist, Lichtsignale aufzunehmen, und einem Mantel, welcher den Kern umgibt, aufweist und wobei der Hohlkern-Lichtwellenleiter eine Länge I hat, wobei der Kern innerhalb des Hauptabschnittes eine konstante, nichtkreisförmige Querschnittsfläche aufweist.

## Beschreibung

Die vorliegende Erfindung betrifft eine Auskoppelvorrichtung zum Auskoppeln eines optischen Signals aus einem Hohlkern-Lichtwellenleiter. Die Auskoppelvorrichtung erfasst die Lichtsignale, die aus dem Hohlkern-Lichtwellenleiter austreten und leitet sie für die weitere Verarbeitung weiter an z.B. einen weiteren Lichtwellenleiter, einen Multiplexer, einen Demultiplexer, einen optischen Sensor oder einen Gitterkoppler.

Die Auskoppelvorrichtung weist auf:
- einen Hohlkern-Lichtwellenleiter mit einem ersten Endabschnitt, einem zweiten Endabschnitt, die jeweils eine Stirnfläche des Lichtwellenleiters umfassen, sowie einem Hauptabschnitt, welcher zwischen dem ersten Endabschnitt und dem zweiten Endabschnitt angeordnet ist, wobei der Hohlkern-Lichtwellenleiter einen Kern, der dafür vorgesehen ist, Lichtsignale aufzunehmen, und einem Mantel, welcher den Kern umgibt, aufweist und wobei der Hohlkern-Lichtwellenleiter eine Länge l hat, wobei der Kern innerhalb des Hauptabschnittes eine konstante, nichtkreisförmige Querschnittsfläche aufweist,
- eine Linse mit einer Eintrittsfläche, die dem ersten Endabschnitt zugewandt ist, und einer Austrittsfläche, die dem zweiten Endabschnitt abgewandt ist,
- eine Halterung, die den ersten Endabschnitt und die Linse hält, wobei die Linse derart ausgebildet und angeordnet ist, dass ein aus dem ersten Endabschnitt austretendes Strahlenbündel auf die Eintrittsfläche trifft und als konvergentes Strahlenbündel auf die Austrittsfläche projiziert wird Lichtwellenleiter mit einem Kern, der dafür vorgesehen ist, Lichtsignale aufzunehmen, und einem Mantel, welcher den Kern umgibt, wobei der Lichtwellenleiter die Länge l hat und einen ersten und einen zweiten Endabschnitt, die jeweils eine Stirnfläche des Lichtwellenleiters umfassen, sowie einen Hauptabschnitt, welcher zwischen den Endabschnitten angeordnet ist, aufweist. Dabei weist der Kern innerhalb des Hauptabschnittes eine konstante Querschnittsfläche auf.

Lichtwellenleiter sind bekannt. In den gebräuchlichsten Fällen bestehen solche Lichtwellenleiter im Inneren aus einem Glaskern und einem umgebenden Mantel mit einem etwas niedrigeren Brechungsindex, sodass durch die dadurch auftretende Totalreflexion an der Grenzschicht zwischen Mantel und Glaskern die Führung der Strahlung bewirkt wird. Solche Fasern bilden heutzutage das Herzstück der Hochleistungstelekommunikationsnetze. Diese Vollkernfasern weisen jedoch eine begrenzte Netzwerkkapazität auf, so dass bei weiterem Wachstum der zu übertragenden Datenmenge eine Kapazitätsengpass droht. Eine Kapazitätsverbesserung ist bei diesen Lichtwellenleitern u. a. aufgrund des nichtlinearen Shannon-Limits nicht zu erwarten.

Daher erfahren Hohlkernfasern bzw. Hohlkern-Lichtwellenleiter bereits seit einigen Jahren mehr und mehr Beachtung. Im Gegensatz zu den beschriebenen Vollkernfasern weisen Hohlkernfasern, in welchen Licht über lange Strecken in Luft oder in Vakuum geleitet werden, Vorteile auf. Der mit Luft gefüllte Kern wird von einer mikrostrukturierten Glasummantelung umgeben, die eine hohe Lichtkonzentration ermöglicht.

Insbesondere in den Fokus gerückt sind die sogenannten NANF ("Nested Antiresonant Nodeless Fibres"), die eine spezielle Art von Hohlkernfasern darstellen, die eine besonders niedrige Dämpfung und hohe Effizienz bei der Lichtführung zeigen. Diese NANFs bestehen aus einem zentralen, hohlen Kern, der von mehreren zylindrischen Glasröhren umgeben ist, die ineinander geschachtelt sind und an die Innenseite eines Glasrohrmantels angebracht sind. Meist sind fünf oder sechs solcher Glasröhrchen vorhanden, während Durchmesser und Abstand zueinander exakt eingestellt ist, um eine antiresonante Bedingung in der transversalen Ebene zu erfüllen. Dadurch wird die Überlappung der Lichtquelle mit dem Glas reduziert und das Licht wird effektiv im hohlen Kern gefangen, welcher aufgrund des Aufbaus dann nicht mehr kreisförmig ist.

Während die Lichtführung innerhalb der Faser hervorragend gelingt, kommt es bei der Auskopplung der Lichtsignale aus der Faser bzw. bei der Übertragung in z.B. eine benachbart angeordnete Faser regelmäßig zu nicht zu vernachlässigenden Verlusten. Hier werden entsprechend designte Steckverbinder verwendet, die jedoch - wie jede im Lichtstrahl angeordnete Komponente - eine Einfügungsdämpfung ("insertion loss") aufweist. Die Leistung des gesamten Systems wird daher bei Verwendung von Hohlkernlichtwellenleitern weniger durch den Lichtwellenleiter selber, sondern durch die Einfügungsdämpfung weiterer, benötigter Komponenten begrenzt.

Eine von einem Strahlenbündel getragene Information wird somit durch die Auskoppelvorrichtung aus der Hohlkernfaser auf die Austrittsfläche projiziert und kann dort weiterverarbeitet oder weitergeleitet werden. Dabei ist es für manche Anwendungsfälle bevorzugt, wenn das Strahlenbündel auf die Austrittsfläche der Linse fokussiert wird. Vorzugsweise ist die Linse derart angeordnet und ausgebildet, dass der Durchmesser des Strahlenbündels auf der Austrittsfläche kleiner als 100µm, besonders bevorzugt kleiner als 25 µm und am besten kleiner als 10 µm ist.

Solch eine Auskoppelvorrichtung in Form eines Lichtwellenleitersteckers ist bereits aus der EP 4 220 259 A1 bekannt, deren Inhalt hier durch Bezugnahme aufgenommen wird. Der detaillierte Aufbau sowie die Anordnung der Linse sind in diesem Dokument im Detail beschrieben.

Die bekannte Auskoppelvorrichtung funktioniert sehr zufriedenstellend. Dennoch kann sie verbessert werden.

Ausgehend von dem beschriebenen Stand der Technik ist es daher Aufgabe der vorliegenden Erfindung eine Auskoppelvorrichtung bereitzustellen, bei deren Verwendung die Einfügungsdämpfung in das nachfolgende Element reduziert wird.

Erfindungsgemäß wird diese Aufgabe dadurch gelöst, dass sich eine erste Querschnittsfläche des Kerns im Hauptabschnitt in Größe und/oder Form von einer zweiten Querschnittsfläche des Kerns auf der Stirnfläche des ersten Endabschnitts unterscheidet, wobei die zweite Querschnittsfläche größer als die erste Querschnittsfläche ist und/oder die erste Querschnittsfläche eine Form hat, in welcher ein Kreis mit einem maximalen Durchmesser d₁ₘₐₓ einbeschrieben werden kann, und die zweite Querschnittsfläche eine Form hat, in welcher ein Kreis mit einem maximalen Durchmesser d₂ₘₐₓ einbeschrieben werden kann, wobei d₁ₘₐₓ < d₂ₘₐₓ ist.

Versuche haben gezeigt, dass sich durch die Veränderung der Querschnittsfläche des Kerns im Endabschnitt die Einfügungsdämpfung des Lichtsignals in das nachfolgende Element deutlich reduzieren kann. Je nach Anwendungsfall muss daher die zweite Querschnittsfläche des Kerns in dem ersten Endabschnitt entsprechend angepasst werden, um ein optimales Ergebnis zu erzielen.

Der beobachtete Effekt ist in Lichtwellenleitern, bei denen der Kern innerhalb des Hauptabschnittes einen nicht kreisförmigen Querschnitt aufweist, besonders ausgeprägt. Die Ausgestaltung mit nicht kreisförmigem Querschnitt kann verschiedene Vorteile in der Lichtführung bieten, wie z.B. eine verbesserten Modenkontrolle, eine geringere Polarisationsabhängigkeit sowie eine verbesserte Biegeunempfindlichkeit. Solche Lichtwellenleiter werden beispielsweise in Kommunikationsnetzwerken, die eine hohe Bandbreite und geringe Übertragungsverluste benötigen, eingesetzt.

Vorzugsweise ist die zweite Querschnittsfläche um mindestens 10% größer als die erste Querschnittsfläche.

Insbesondere bei den Hohlkernfasern hat die Querschnittsfläche des Kerns eine unregelmäßige Form, da sie lediglich durch die Glasröhrchen begrenzt wird. Allerdings ergibt sich ein zentraler Abschnitt des Kerns, der am besten durch einen einbeschriebenen Kreis, welcher die Glasröhrchen berührt, gekennzeichnet werden kann. In einer bevorzugten Ausführungsform hat die erste Querschnittsfläche eine Form, in welcher ein Kreis mit einem maximalen Durchmesser d₁ₘₐₓ einbeschrieben werden kann, und die zweite Querschnittsfläche eine Form, in welche ein Kreis mit einem maximalen Durchmesser d₂ₘₐₓ einbeschrieben werden kann, wobei d₁ₘₐₓ < d₂ₘₐₓ ist. Vorzugsweise ist d₂ₘₐₓ um mindestens 10% und am besten um mindestens 20% größer als d₁ₘₐₓ.

Des Weiteren hat sich gezeigt, dass es von Vorteil ist, wenn die Formveränderung nicht abrupt, sondern allmählich im Endabschnitt erfolgt, d.h. bereits in einem bestimmten Abstand zur Stirnfläche eine Formveränderung des Kerns stattfindet. Daher ist in einer bevorzugten Ausführungsform vorgesehen, dass in dem ersten Endabschnitt vom Hauptabschnitt in Richtung der Stirnfläche die Größe der Querschnittsfläche des Kerns sich monoton vergrößert, wobei vorzugsweise in dem ersten Endabschnitt vom Hauptabschnitt in Richtung der Stirnfläche die Größe der Querschnittsfläche des Kerns sich streng monoton vergrößert. Bei einer monotonen Vergrößerung der Querschnittsfläche sind auch Zwischenbereiche möglich, in welchen die Querschnittsfläche des Kerns konstant bleibt, während bei einer streng monotonen Vergrößerung, sich die Querschnittsfläche kontinuierlich vergrößert.

Des Weiteren ist es von Vorteil, wenn in dem ersten Endabschnitt vom Hauptabschnitt in Richtung der Stirnfläche der maximale Durchmesser eines in die Querschnittsfläche einbeschriebenen Kreises sich monoton vergrößert, wobei vorzugsweise die Verformung, d.h. die Vergrößerung des Durchmessers des einbeschriebenen Kreises sich streng monoton vergrößert.

Des Weiteren ist es von Vorteil, wenn der erste Endabschnitt in Richtung des Hauptabschnittes eine Länge l_{E} hat, welche mindestens 30 µm, vorzugsweise mindestens 50 µm und besonders bevorzugt mindestens 100 µm beträgt. In einer bevorzugten Ausführungsform ist die Länge des Endabschnittes kleiner als 1 mm, vorzugsweise kleiner als 500 µm und am besten zwischen 100 und 300 µm.

Auch wenn sich die Form des Kerns im ersten Endabschnitt von der Form des Kerns im Hauptabschnittes unterscheidet, ist es von Vorteil, wenn der Außendurchmesser des Mantels im Hauptabschnitt dem Außendurchmesser des Mantels im ersten Endabschnitt entspricht.

In einer weiteren bevorzugten Ausführungsform ist vorgesehen, dass die Hohlkernfaser eine photonische Kristallfaser oder eine Antiresonanz-Faser ist.

Daher weist vorzugsweise der Mantel eine Struktur auf, welche entweder eine photonische Bandlücke oder eine antiresonante Eigenschaft aufweist.

Bei einer photonischen Kristallfaser erfolgt die Lichtleitung durch Bandlücken. Diese Fasern haben einen Kern, welcher von einer regelmäßigen Struktur aus winzigen Luftkanälen - als Teil des Mantels - umgeben ist. Die Bandlücken entstehen, wenn das periodische Muster der Luftkanäle bestimmte Lichtwellenlängen daran hindert, sich in bestimmte Richtungen auszubreiten, wodurch das Licht innerhalb des Kerns gefangen bleibt. Dies erlaubt eine sehr präzise Kontrolle über die geführten Wellenlängen.

Bei einer Antiresonanz-Faser befindet sich im Zentrum der Faser ein hohler oder mit Gas gefüllter Kern. Dieser Kern ist umgeben von einer Struktur, die als Mantel dient. Zumindest ein Teil der Struktur ist aus Materialien mit unterschiedlichen Brechungsindizes aufgebaut. Sie sind so konstruiert, dass sie bei bestimmten Wellenlängen antiresonant sind.

Das Kernprinzip hinter Antiresonanz-Fasern ist die Nutzung von antiresonanten Effekten, um Licht innerhalb des hohlen Kerns zu führen. Das Licht, das auf die umgebende Struktur trifft, wird reflektiert, statt absorbiert oder durchgelassen zu werden. Dies passiert, weil die Dimensionen der Struktur so gewählt sind, dass sie bei bestimmten Wellenlängen eine destruktive Interferenz erzeugen.

Wie bereits ausgeführt, ist es von Vorteil, dass die Struktur eine Mehrzahl von zylinderförmigen Röhrchen aufweist, wobei besonders bevorzugt in den zylinderförmigen Röhrchen Kapillaren mit einem Außendurchmesser, der kleiner als ein Innendurchmesser der Röhrchen ist, angeordnet sind.

In dieser Ausführungsform ist es von Vorteil, wenn die Röhrchen und vorzugsweise auch die Kapillaren in der zweiten Querschnittsfläche nicht kreisförmig und in der ersten Querschnittsfläche kreisförmig ausgebildet sind. Die Vergrößerung des Kerns kommt somit im Wesentlichen durch eine Verformung der Röhrchen und Kapillaren zustande.

Des Weiteren kann die Einfügungsdämpfung weiter reduziert werden, wenn die Linse und deren Eintrittsfläche derart ausgebildet und angeordnet sind, dass der Brennpunkt der Linse nicht auf der Stirnfläche, sondern im Kern der Hohlkernfaser liegt, wobei vorzugsweise der Brennpunkt im Hauptabschnitt oder auf einer Grenze zwischen erstem Endabschnitt und Hauptabschnitt liegt.

In einer weiteren bevorzugten Ausführungsform ist vorgesehen dass die Linse als 2-Abschnitts-Linse ausgebildet ist und zumindest zwei Abschnitte, nämlich einen ersten Abschnitt, welcher durch die Eintrittsfläche begrenzt wird, und einen zweiten Abschnitt, welcher durch die Austrittsfläche begrenzt wird, aufweist, wobei der Brechungsindex n₁ des ersten Abschnittes sich von dem Brechungsindex ₙ₂ des zweiten Abschnittes unterscheidet.

Für besondere Anwendungsfälle können auch mehr als zwei Abschnitte vorgesehen sein. Beispielsweise kann die Linse drei Abschnitte haben, die sich jeweils in ihrem Brechungsindex unterscheiden.

Wenn die Linse aus mehreren Teilen besteht, können diese Teile mit einem Klebstoff miteinander verbunden sein. Die dünne Klebstoffschicht bildet dann keinen Linsenabschnitt im Sinne der vorliegenden Erfindung. In einer bevorzugten Ausführungsform ist daher vorgesehen, dass jeder Abschnitt der Linse eine Dicke von mindestens 0,2 mm und vorzugsweise von mindestens 0,3mm aufweist, so dass das Strahlenbündel beim Durchtritt durch die Linse in jedem Abschnitt eine Wegstrecke von mindestens 0,2 bzw. 0,3 mm durchläuft.

Wenn ein aus dem Hohlkernlichtleiter austretendes Strahlenbündel auf die Austrittsfläche der Linse fokussiert wird, kann ein zweiter Wellenleiter, welcher das Signal aufnehmen soll, mit seiner Endfläche direkt an der Austrittsfläche der Linse positioniert werden. Beim Übergang zwischen der Linse und dem zweiten Wellenleiter kommt es dann jedoch zu unerwünschten Rückreflexionen, die u.a. die Signalstärke reduzieren.

Daher ist die Linse vorzugsweise als 2-Abschnitts-Linse mit zwei Abschnitten mit unterschiedlichem Brechungsindex ausgebildet. Dabei ist in einer bevorzugten Ausführungsform der Brechungsindex n₂ des zweiten Abschnittes kleiner als der Brechungsindex n₁ des ersten Abschnitts, wobei vorzugsweise der Brechungsindex n₂ kleiner als 1,5 und besonders bevorzugt 1,5 > *n*₂ > 1,4 ist. Diese Wahl der Brechungsindex hat sich als effektiv erwiesen. Der Brechungsindex n₂ kann vorzugsweise an den Brechungsindex einer als zweiten Lichtwellenleiter verwendeten Vollkernfaser angepasst werden.

Beispielsweise kann der erste Abschnitt aus einem anderen Material als der zweite Abschnitt hergestellt sein. Ebenfalls von Vorteil ist es, wenn der Brechungsindex n₁ innerhalb des ersten Abschnitts und/oder der Brechungsindex n₂ innerhalb des zweiten Abschnittes konstant ist, da sich dann die 2-Abschnitts-Linse leichter herstellen lässt. Dabei hat es sich gezeigt, dass besonders bevorzugt der zweite Abschnitt in der Ausbreitungsrichtung eine größere Länge als der erste Abschnitt in der Ausbreitungsrichtung aufweist.

In einer weiteren bevorzugten Ausführungsform ist die 2-Abschnitts-Linse zweiteilig ausgebildet mit einem ersten Teil, welcher den ersten Abschnitt umfasst, und einem zweiten Teil, welcher den zweiten Abschnitt aufweist. Die Teile können daher separat gefertigt und nebeneinander positioniert werden, wobei besonders bevorzugt die beiden Teile der 2-Abschnitts-Linse einander zugewandte Kontaktflächen aufweisen, an denen die beiden Teile direkt oder über eine dazwischen angeordnete Klebstoffschicht miteinander in Kontakt stehen, so dass ein aus dem der 2-Abschnitts-Linse zugeordneten ersten Lichtwellenleiter austretendes Strahlenbündel auf die Eintrittsfläche des erstem Teils trifft und über die Kontaktflächen in das zweite Teil tritt. Der zweite Teil kann beispielsweise ein Glaskörper mit parallelen oder nahezu parallelen Eingangs- und Ausgangsflächen sein. Es ist nicht notwendig, dass jedes Teil eine gekrümmte Oberfläche aufweist. Wesentlich ist lediglich, dass die Kombination der beiden Teile, d.h. die zusammengesetzte 2-Abschnitts-Linse ein konvergentes Strahlenbündel aus dem aus der Stirnfläche des ersten Lichtwellenleiters austretendes Lichtsignal erzeugt. In einer bevorzugten Ausführungsform sind die beiden Teile miteinander verklebt, so dass sich zwischen den beiden Teilen eine dünne Klebstoffschicht ausbildet. Alternativ können die beiden Teile sich auch ohne Klebstoffschicht direkt an ihren Kontaktflächen berühren.

Schließlich betrifft die vorliegende Erfindung auch einen Lichtwellenleiterstecker für einen Lichtwellenleiterverbinder zum optischen Verbinden eines Hohlkern-Lichtwellenleiter mit einem weiteren Lichtwellenleiter. Die obengenannte Aufgabe wird hier dadurch gelöst, dass der Lichtwellenleiterstecker die oben beschriebene, erfindungsgemäße Auskoppelvorrichtung aufweist.

Ein solcher Lichtwellenleiterverbinder ermöglicht die Verbindung einer Hohlkernfaser mit einer Vollkernfaser. Hierbei besteht u. a. das Problem, das Hohlkernfasern einen deutlich größeren Modenfelddurchmesser haben als Vollkernfasern. Durch den Einsatz der beschriebenen Lichtwellenleitern kann gerade im Endabschnitt der Modenfelddurchmesser noch größer werden, was das Problem noch verschärft. Der beschriebene Lichtwellenleiterverbinder ist allerdings in der Lage auch solch großen Unterschiede in den Modenfelddurchmesser abzubilden.

Es ist natürlich auch möglich, mit dem Lichtwellenleiterstecker die Hohlkernfaser mit einer weiteren Hohlkernfaser zu verbinden.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:
- Figur 1: einen Längsschnitt eines erfindungsgemäßen Lichtwellensteckers mit einem Hohlkern-Lichtwellenleiter,
- Figur 2: eine Detailvergrößerung von Figur 1,
- Figur 3: zwei Querschnittsansichten durch den Hohlkern-Lichtwellenleiter,
- Figur 4: Detailvergrößerungen der Querschnittsansichten von Figur 4,
- Figur 5: eine Längsschnittansicht durch den Hohlkern-Lichtwellenleiter und
- Figur 6: eine schematische Darstellung eines erfindungsgemäßen Auskoppelelementes.

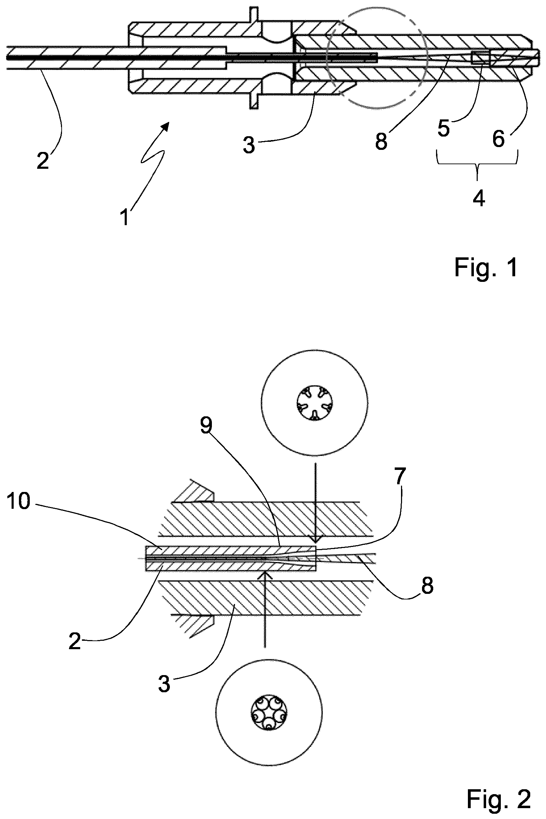

In Figur 1 ist ein Längsschnitt einer erfindungsgemäßen, als Lichtwellenstecker ausgebildeten Auskoppelvorrichtung gezeigt.

In dem Lichtwellenleiterstecker 1 ist ein Ende eines Hohlkernlichtwellenleiters 2 angeordnet. Dieses Ende wird in einem Durchgangskanal einer Halterung 3 gehalten. Weiterhin ist eine Linse 4 vorgesehen.

Aus einer Stirnfläche 7 des Hohlkernlichtwellenleiters 2 tritt ein Lichtstrahl bzw. ein Strahlenbündel 8 aus, der bzw. das sich in Richtung der Linse 4 verbreitert. Die Linse 4 ist derart ausgebildet, dass sie den Lichtstrahl 8, der auf eine Eintrittsfläche der Linse 4 trifft, als konvergentes Strahlenbündel auf die Austrittsfläche der Linse 4 projiziert und vorzugsweise fokussiert. Im besten Fall befindet sich die Austrittsfläche im Fokus des konvergenten Strahlenbündels. Eine Anordnung außerhalb des Fokus ist auch möglich, auch wenn dies nachteilig ist.

Die Linse weist zwei Abschnitte 5, 6 mit unterschiedlichen Brechungsindices auf.

Auch wenn anhand der bevorzugten Ausführungsform beschrieben wird, dass ein Lichtstrahl 8 aus der Stirnfläche 7 des Hohlkernlichtwellenleiters 2 austritt und auf die Eintrittsfläche der Linse 4 trifft, kann der Signallauf auch umgekehrt sein. Ein über die Austrittsfläche der Linse 4 eingekoppeltes Signal kann auch auf die Stirnfläche 7 der Hohlkernfaser 2 abgebildet werden.

Deutlich zu erkennen ist, dass die Linse 4 hier aus zwei Teilen besteht, wobei der erste Teil den ersten Abschnitt 5 und der zweite Teil den zweiten Abschnitt 6 bildet. Der Brechungsindex n₁ im ersten Abschnitt 5 ist konstant und größer als der Brechungsindex n₂ im zweiten Abschnitt 6. Der zweite Abschnitt 6 hat in Ausbreitungsrichtung des Lichtstrahls eine Länge die deutlich größer ist (im gezeigten Beispiel mehr als doppelt so lang) als die Länge des ersten Abschnittes 5 in Ausbreitungsrichtung des Lichtstrahles ist.

Der erste Abschnitt 5 weist die Eintrittsfläche auf und ist mit dem zweiten Abschnitt 6 verklebt. Der zweite Abschnitt 6 weist die Austrittsfläche auf. Deutlich zu erkennen ist, dass der Durchmesser des zweiten Abschnittes 6 größer als der Durchmesser des ersten Abschnittes 5 ist. Der Durchmesser des zweiten Abschnittes 6 entspricht im Wesentlichen dem Innendurchmesser des Durchgangskanals der Halterung 3. Dies hat den Vorteil, dass die Linse 4, mit den bereits miteinander verbundenen Abschnitten 5,6 in den Durchgangskanal der Halterung 3 eingeschoben werden kann und dann bereits lateral korrekt positioniert ist.

In Figur 2 ist eine Detailvergrößerung von Figur 1 gezeigt. Zu erkennen ist die Hohlkernfaser bzw. der Hohlkern-Lichtwellenleiter 2, der in der Halterung 3 gehalten wird und die Stirnfläche 7 aufweist. Auch hier ist wieder schematisch ein Strahlenbündel 8 dargestellt. Die Hohlkernfaser 2 hat einen Kern 15, der dafür vorgesehen ist, Lichtsignale aufzunehmen, und einen Mantel, welcher den Kern 15 umgibt. Die Hohlkernfaser 7 hat einen Hauptabschnitt 10, welcher von einem ersten Endabschnitt 9 begrenzt wird. Die Hohlkernfaser 7 kann sehr lang, z.B. mehrere Kilometer lang sein. Ein zweiter Endabschnitt ist an der dem ersten Endabschnitt 9 gegenüberliegendem Ende des Hauptabschnittes 10 angeordnet und daher in der Figur nicht dargestellt.

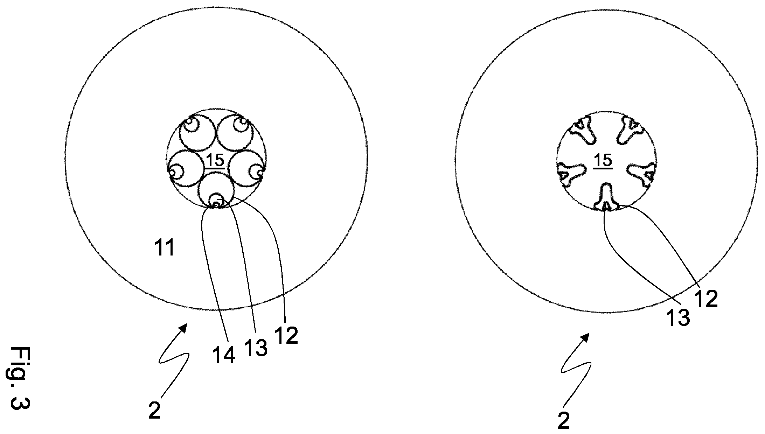

In Figur 2 ist auch zu erkennen, dass der Kern im Bereich des ersten Endabschnittes 9 eine größere Ausdehnung hat als im Bereich des Hauptabschnittes 10. In Figur 2 sind auch zwei Querschnitte durch die Hohlkernfaser 2 angedeutet, die in Figur 3 vergrößert dargestellt sind.

In Figur 3 wird auf der linken Seite ein erster Querschnitt der Hohlkernfaser 2 im Hauptabschnitt 10 und auf der rechten Seite ein zweiter Querschnitt der Hohlkernfaser 2 im ersten Endabschnitt 9 dargestellt.

Der Hohlkern-Lichtwellenleiter hat einen Kern 15, der dafür vorgesehen ist, Lichtsignale aufzunehmen, und einen Mantel, welcher den Kern 15 umgibt. Der Mantel wiederum besteht aus einer Umhüllung 11 sowie einer antiresonanten Struktur 16. Die antiresonante Struktur 16 wiederum besteht aus einer Mehrzahl von zylinderförmigen Röhrchen 12, in denen Kapillaren 13 angeordnet sind. In der gezeigten Ausführungsform sind in den Kapillaren 13 weitere Kapillaren 14 mit noch kleinerem Außendurchmesser aufgenommen. Die Lichtleitung erfolgt innerhalb des Kerns 15, der nicht kreisförmig ausgebildet ist, mit der Folge, dass auch das Lichtbündel innerhalb des Hohlkern-Lichtwellenleiters 2 eine nicht kreisförmige Intensitätsverteilung aufweist.

In der rechten Ansicht von Figur 3 sind die Röhrchen 12 und Kapillaren 13 und 14 stark verformt, so dass die Fläche, die der Kern 15 einnimmt, größer geworden ist.

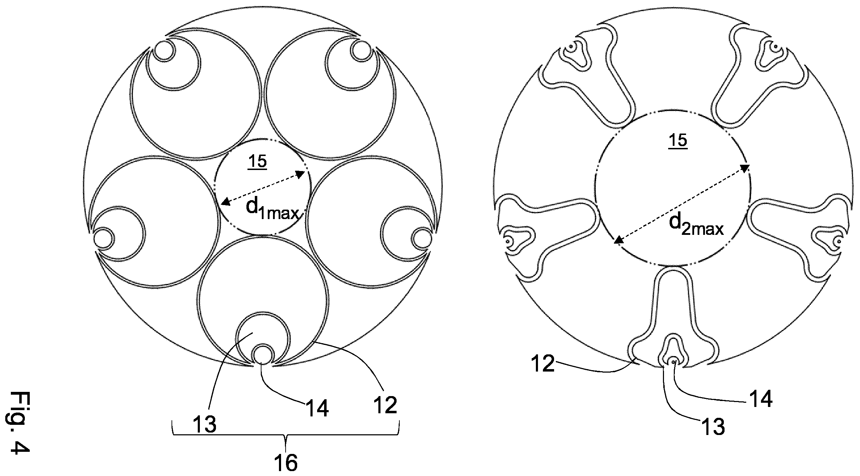

In Figur 4 sind die gleichen Ansichten wie in Figur 3 gezeigt. Die Umhüllung 11 wurde weggelassen, um die Querschnitte größer darstellen zu können. Da die Fläche des Kerns 15, d. h. die Fläche, die nicht von der Umhüllung 11 und der antiresonanten Struktur 16 eingenommen wird, nur schwer zu bestimmen ist, wurde in den Figuren jeweils ein Kreis mit maximalem Durchmesser in den Bereich des Kerns 15 einbeschrieben. Der Durchmesser d₁ₘₐₓ des im linken Querschnitt aus dem Hauptabschnitt 10 ist deutlich kleiner als der Durchmesser d₂ₘₐₓ des rechten Querschnitts aus dem ersten Endabschnitt 9.

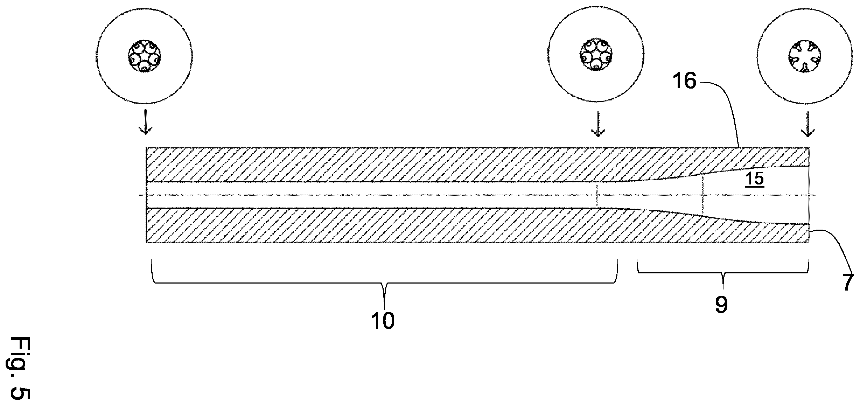

In Figur 5 ist ein Längsschnitt eines Teils der Hohlkernfaser 2 abgebildet, welche den ersten Endabschnitt 9 und einen Teil des Hauptabschnittes 10 umfasst. Der Kern 15 weitet sich in Richtung der Stirnfläche 7 auf. In der gezeigten Ausführungsform wird somit die Querschnittsfläche des Kern 15 im Endabschnitt 9 in Richtung der Stirnfläche 7 streng monoton größer.

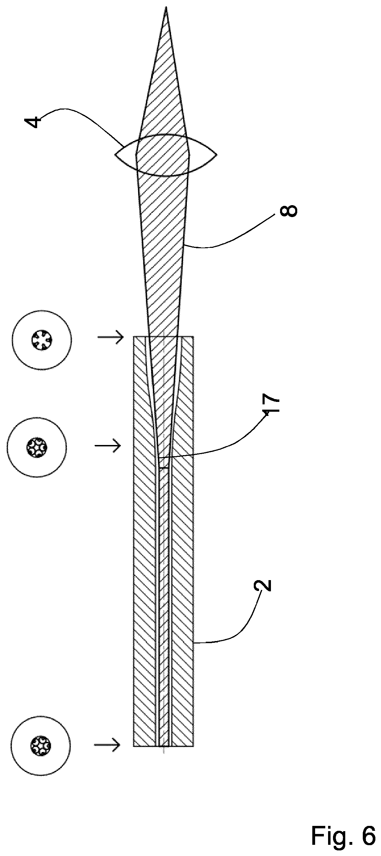

In Figur 6 ist schematisch der Aufbau einer erfindungsgemäßen Auskoppelvorrichtung dargestellt. Die wesentlichen Elemente der Auskoppelvorrichtung sind die Hohlkernfaser 2 mit einem speziell geformten ersten Endabschnitt 9 sowie die Linse 4. In der Darstellung ist ein in der Hohlkernfaser 2 geführter Lichtstrahl 8 schematisch angedeutet. Der aus dem ersten Endabschnitt der Hohlkernfaser 2 austretende Lichtstrahl 8 trifft auf die Eintrittsfläche der Linse 4 und wird von dieser als Konvergenz des Strahlenbündels auf die Austrittsfläche der Linse 4 projiziert. Die Linse 4 ist in Figur 6 nicht als 2-Abschnitts-Linse ausgebildet. Die Linse 4 ist derart ausgebildet und angeordnet, dass der Fokus 17 der Linse 4 innerhalb der Hohlkernfaser 2 liegt, und zwar im gezeigten Beispiel innerhalb des Hauptabschnittes 10 bzw. in unmittelbarer Nähe zu der Verbindung zwischen Hauptabschnitt 10 und erstem Endabschnitt 9.

Durch die beschriebene Aufweitung des Kerns 15 im ersten Endabschnitt 9, welcher der Linse 4 zugewandt ist, wird der lichtführende Kern 15 runder, sodass bei einer Ankopplung an ein weiterführendes Element eine Winkelorientierung um die Lichtwellenleiterachse in der Regel entfallen kann.

### Bezugszeichenliste

- 1: Lichtwellenleiterstecker
- 2: Hohlkern-Lichtwellenleiter
- 3: Halterung
- 4: Linse
- 5: erster Abschnitt
- 6: zweiter Abschnitt
- 7: Stirnfläche
- 8: Strahlenbündel
- 9: erster Endabschnitt
- 10: Hauptabschnitt
- 11: Umhüllung
- 12: Röhrchen
- 13, 14: Kapillare
- 15: Kern
- 16: antiresonante Struktur
- 17: Fokus

## Patentansprüche

1. Auskoppelvorrichtung zum Auskoppeln eines optischen Signals aus einem Hohlkern-Lichtwellenleiter, wobei die Auskoppelvorrichtung aufweist:
- einen Hohlkern-Lichtwellenleiter mit einem ersten Endabschnitt, einem zweiten Endabschnitt, die jeweils eine Stirnfläche des Lichtwellenleiters umfassen, sowie einem Hauptabschnitt, welcher zwischen dem ersten Endabschnitt und dem zweiten Endabschnitt angeordnet ist, wobei der Hohlkern-Lichtwellenleiter einen Kern, der dafür vorgesehen ist, Lichtsignale aufzunehmen, und einem Mantel, welcher den Kern umgibt, aufweist und wobei der Hohlkern-Lichtwellenleiter eine Länge l hat, wobei der Kern innerhalb des Hauptabschnittes eine konstante, nichtkreisförmige Querschnittsfläche aufweist,
- eine Linse mit einer Eintrittsfläche, die dem ersten Endabschnitt zugewandt ist, und einer Austrittsfläche, die dem zweiten Endabschnitt abgewandt ist,
- eine Halterung, die den ersten Endabschnitt und die Linse hält, wobei die Linse derart ausgebildet und angeordnet ist, dass ein aus dem ersten Endabschnitt austretendes Strahlenbündel auf die Eintrittsfläche trifft und als konvergentes Strahlenbündel auf die Austrittsfläche projiziert wird, **dadurch gekennzeichnet, dass** sich eine erste Querschnittsfläche des Kerns im Hauptabschnitt in Größe und/oder Form von einer zweiten Querschnittsfläche des Kerns auf der Stirnfläche des ersten Endabschnitts unterscheidet, wobei die zweite Querschnittsfläche größer als die erste Querschnittsfläche ist und/oder die erste Querschnittsfläche eine Form hat, in welcher ein Kreis mit einem maximalen Durchmesser d₁ₘₐₓ einbeschrieben werden kann, und die zweite Querschnittsfläche eine Form hat, in welcher ein Kreis mit einem maximalen Durchmesser d₂ₘₐₓ einbeschrieben werden kann, wobei d₁ₘₐₓ < d₂ₘₐₓ ist.

2. Auskoppelvorrichtung nach Anspruch 1, **dadurch gekennzeichnet, dass** in dem ersten Endabschnitt vom Hauptabschnitt in Richtung der Stirnfläche die Größe der Querschnittsfläche des Kerns sich monoton vergrößert, wobei vorzugsweise in dem ersten Endabschnitt vom Hauptabschnitt in Richtung der Stirnfläche die Größe der Querschnittsfläche des Kerns sich streng monoton vergrößert.

3. Auskoppelvorrichtung nach Anspruch 1 oder 2, **dadurch gekennzeichnet, dass** in dem ersten Endabschnitt vom Hauptabschnitt in Richtung der Stirnfläche der maximale Durchmesser eines in die Querschnittsfläche einbeschriebenen Kreises sich vergrößert, wobei vorzugsweise in dem ersten Endabschnitt vom Hauptabschnitt in Richtung der Stirnfläche der maximale Durchmesser eines in die Querschnittsfläche einbeschriebenen Kreises sich monoton und besonders bevorzugt streng monoton vergrößert.

4. Auskoppelvorrichtung nach einem Ansprüche 1 bis 3, **dadurch gekennzeichnet, dass** der erste Endabschnitt in Richtung des Hauptabschnittes eine Länge l_{E} hat, welche mindestens 30 µm, vorzugsweise mindestens 50µm und besonders bevorzugt mindestens 100 µm beträgt.

5. Auskoppelvorrichtung nach einem Ansprüche 1 bis 3, **dadurch gekennzeichnet, dass** der erste Endabschnitt in Richtung des Hauptabschnittes eine Länge l_{E} hat, welche kleiner als 1 mm, vorzugsweise kleiner als 500 µm und am besten zwischen 100 und 300 µm.

6. Auskoppelvorrichtung nach einem der Ansprüche 1 bis 5, **dadurch gekennzeichnet, dass** ein Außendurchmesser des Mantels im Hauptabschnitt einem Außendurchmesser des Mantels im ersten Endabschnitt entspricht.

7. Auskoppelvorrichtung nach einem der Ansprüche 1 bis 6, **dadurch gekennzeichnet, dass** die Hohlkernfaser eine photonische Kristallfaser oder eine Antiresonanz-Faser ist.

8. Auskoppelvorrichtung nach Anspruch 7, **dadurch gekennzeichnet, dass** der Mantel eine Struktur aufweist, welche entweder eine photonische Bandlücke oder eine antiresonante Eigenschaft aufweist.

9. Auskoppelvorrichtung nach Anspruch 8, **dadurch gekennzeichnet, dass** die Struktur eine Mehrzahl von zylinderförmigen Röhrchen aufweist, wobei vorzugsweise in den zylinderförmigen Röhrchen Kapillaren mit einem Außendurchmesser, der kleiner als ein Innendurchmesser der Röhrchen ist, angeordnet sind.

10. Auskoppelvorrichtung nach Anspruch 9, **dadurch gekennzeichnet, dass** die Röhrchen und vorzugsweise auch die Kapillaren in der zweiten Querschnittsfläche nicht kreisförmig und in der ersten Querschnittsfläche kreisförmig ausgebildet sind.

11. Auskoppelvorrichtung nach einem der Ansprüche 1 bis 10, **dadurch gekennzeichnet, dass** die Linse und deren Eintrittsfläche derart ausgebildet und angeordnet sind, dass der Brennpunkt der Linse nicht auf der Stirnfläche, sondern im Kern der Hohlkernfaser liegt, wobei vorzugsweise der Brennpunkt im Hauptabschnitt oder auf einer Grenze zwischen erstem Endabschnitt und Hauptabschnitt liegt.

12. Auskoppelvorrichtung nach einem der Ansprüche 1 bis 11, **dadurch gekennzeichnet, dass** die Linse als 2-Abschnitts-Linse ausgebildet ist und zumindest zwei Abschnitte, nämlich einen ersten Abschnitt, welcher durch die Eintrittsfläche begrenzt wird, und einen zweiten Abschnitt, welcher durch die Austrittsfläche begrenzt wird, aufweist, wobei der Brechungsindex n₁ des ersten Abschnittes sich von dem Brechungsindex n₂ des zweiten Abschnittes unterscheidet.

13. Lichtwellenleiterstecker für einen Lichtwellenleiterverbinder zum optischen Verbinden eines Hohlkern-Lichtwellenleiter mit einem weiteren Lichtwellenleiter, **dadurch gekennzeichnet, dass** der Lichtwellenleiterstecker die Auskoppelvorrichtung nach einem der Ansprüche 1 bis 12 aufweist.
